(19)

Europäisches
Patentamt
European
Patent Office
Office européen
des brevets

(11) EP 2 784 458 A1

(12) EUROPEAN PATENT APPLICATION

(43) Date of publication:
01.10.2014 Bulletin 2014/40

(51) Int Cl.:
G01J 3/46 (2006.01)    G01J 3/18 (2006.01)
G01J 3/24 (2006.01)    H04N 1/60 (2006.01)
H04N 9/31 (2006.01)    H04N 9/73 (2006.01)
G01J 3/12 (2006.01)    G01J 3/28 (2006.01)

(21) Application number: 14159885.4

(22) Date of filing: 14.03.2014

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 29.03.2013 JP 2013071525

(71) Applicant: Funai Electric Co., Ltd.
Daito city
Osaka 574-0013 (JP)

(72) Inventor: Takemoto, Seiji
Osaka Osaka 574-0013 (JP)

(74) Representative: Osha Liang SARL
32, avenue de l'Opéra
75002 Paris (FR)

(54) **Projector, head-up display device, and control method of projector**

(57)    The invention concerns a projector that includes a plurality of laser light sources that emit laser lights of mutually differing colors, a combiner that combines the laser lights, a laser light scanner that projects an image onto a projection surface by scanning the laser lights combined by the combiner, a laser light detection unit, and a controller. The laser light detection unit further includes a first laser light detector and a second laser light detector. The controller calculates an amount of change in an optical axis of the laser lights based on a displacement of the irradiation position of the first diffracted light, calculates an amount of change in a wavelength of the laser lights based on the amount of change in the optical axis and a displacement of the irradiation position of the second diffracted light, and adjust an output ratio.

FIG. 2

**Description**

Field of the Invention

The present invention generally relates to a projector that projects a color image by a plurality of laser lights of different color components, a head-up display device, and a projector control method.

Background Art

In recent years various types of image display devices have been created. The various types display a color image on a projection surface by combining and projecting onto the projection surface red (R), green (G), and blue (B) laser light, as exemplified by a laser projector. With this type of image display device, the color states of the light beam in which the R, G, and B color laser lights are combined must be kept in a predetermined state in order to project and display the color image with good color reproduction. The white balance is traditionally adjusted for the light beam in which the R, G, and B color laser lights are combined.
JP 2008-3270 A discloses a projection-type image display device adjusts the white balance. Specifically, output signals indicating the amount of light for R, G, and B, obtained by directing part of the combined white light beam to photo sensors through color filters are compared with signals indicating the amount of light for R, G, and B when the white balance has been adjusted, and the drive gain for each light source is changed so as to minimize the discrepancy between those two signals. The white color and light intensity can thereby by maintained constant and a stable white balance can be obtained.
In a projection-type image display device which projects a color image, causes of deteriorated white balance include changes in the output amount of light of the light sources and changes in the output wavelength of the light sources. In other words, a state in which white balance can be achieved is a state in which the amount of light (i.e., the output of the light sources) is constant relative to the wavelengths of the lights of various colors; if the output wavelengths of the light sources vary, the white balance will be lost.
However, with the projection-type image display device disclosed in JP 2008-3270 A, the wavelengths for R, G, and B are limited by the color filters, and the discrepancy thereamong after comparison cannot be identified as being due to changes in the output amounts of light of the light sources or changes in the wavelengths of the light sources.
With this projection-type image display device, laser diodes (LDs) or the like are used as the laser light sources of each color component, but such laser light source elements have output wavelengths which fluctuate with changes in temperature. In particular, projection-type image display devices are subject to use in many environments and installation of parts other than the laser light sources which give off heat, exposing the laser light sources to temperature changes. This results in changes in the wavelengths of the output laser lights. In other words, with this type of projection-type image display device, white balance of the laser light sources is lost due to changes in the wavelengths of the laser lights of various color caused by changes in temperature.
One or more embodiments of the present invention provide a projector wherein predetermined color states, such as white balance, can be maintained despite changes in laser light wavelengths, a head-up display device, and a projector control method.

Summary of the Invention

A projector according to one or more embodiments may comprise a projector that further comprises a plurality of laser light sources that emit laser lights of mutually differing colors, a combiner that combines the laser lights, a laser light scanner that projects an image onto a projection surface by scanning the laser lights combined by the combiner, a laser light detection unit, and a controller. The laser light detection unit may further comprise a first laser light detector that detects an irradiation position of a first diffracted light of the laser lights emitted by the plurality of laser light sources and a second laser light detector that detects an irradiation position of a second diffracted light of the laser lights. Furthermore, the controller may calculate an amount of change in an optical axis of the laser lights based on a displacement of the irradiation position of the first diffracted light and calculate an amount of change in a wavelength of the laser lights based on the amount of change in the optical axis and a displacement of the irradiation position of the second diffracted light, and adjusts an output ratio for the plurality of laser light sources according to the amount of change in the wavelength of the laser lights.
According to one or more embodiments, the controller may extract or calculate the amount of change in wavelengths with high precision on the basis of the irradiation position of diffracted light detected by first and second laser light detectors which have laser light detectors, even if the optical axes or wavelengths of the laser lights of various colors output by the laser light sources become misaligned due to degradation over time, fluctuations in temperature, and the like. The controller may adjust an output ratio of the laser light sources so as to maintain the predetermined color state, based on the amount of change in wavelengths thus extracted. In one or more embodiments, it is therefore possible to maintain the combined laser light in the predetermined color state through white balance adjustment and the like, even if the wavelengths of the laser lights change due to degradation over time, temperature change, or the like.

For example, in the projector according to one or more embodiments of the present invention, the laser light detection further comprises a diffraction element disposed between the combiner and the first laser light detector and the second laser light detector and that changes a direction of propagation of the laser lights according to the wavelengths of the laser lights.

According to one or more embodiments, the irradiation position of the diffraction light may be varied according to the wavelength of the laser light, and therefore the control can extract the amount of change in wavelength from the displacement of the irradiation positions of first and second diffracted lights.

For example, in the projector according to one or more embodiments of the present invention, it is also possible that the first laser light detector detects a change in the irradiation position of the first diffracted light when the optical axis of the laser light changes, and the second laser light detector detects a change in the irradiation position of the second diffracted light when the optical axis or the wavelength of the laser light changes.

According to one or more embodiments, the controller can remove an optical axis change component from the laser light included in the change component of the irradiation position of the first diffracted light from the optical axis change component and the wavelength change component of the laser light included in the change in the irradiation position of the second diffracted light, and thereby extract only the wavelength change component of the laser light.

For example, in the projector according to one or more embodiments of the present invention, it is possible that the first laser light detector comprises a plurality of first light receiving elements disposed along a direction of change of the irradiation position of the first diffracted light, the second laser light detector comprises a plurality of second light receiving elements disposed along a direction of change of the irradiation position of the second diffracted light, and the controller calculates the displacement of the irradiation position of the first diffracted light based on a change in ratio of an amount of light received between the plurality of first light receiving elements and the displacement in the irradiation position of the second diffracted light based on a change in ratio of an amount of light received between the plurality of second light receiving elements.

According to one or more embodiments, two or more light receiving elements may be disposed along the direction of change of the irradiation position of the diffracted light, and therefore the control can calculate displacement in the irradiation position of the diffracted light based on a simple, one-dimensional disposition of the light receiving elements.

For example, in the projector according to one or more embodiments of the present invention, it is possible that the plurality of first light receiving elements are disposed to detect an irradiation position of zero-order diffracted light among the laser lights output by the plurality of laser light sources, and the plurality of second light receiving elements are disposed to detect an irradiation position of first-order diffracted light among the laser lights output by the plurality of laser light sources.

According to one or more embodiments, the zero-order diffracted light may not cause the direction of propagation of the laser light to change due to a change in wavelength, but does cause the direction of propagation of the laser light to change due to a change in the optical axis. On the other hand, the first-order diffracted light may cause the direction of propagation of the laser light to change due to either a change in the wavelength or a change in the optical axis. Thus, the wavelength change component in the laser light can be extracted by itself from the ratio of the amount of light received between the two or more first light receiving elements and the ratio of the amount of light received between the two or more second light receiving elements.

For example, in the projector according to one or more embodiments of the present invention, it is also possible that two of the plurality of the first light receiving elements are disposed adjacent to one another, and the two of the plurality of first light receiving elements are arranged so that the zero-order diffracted light is focused on a position between the two of the plurality of first light receiving elements in an initial state. According to one or more embodiments of the present invention, it is also possible that two of the plurality of second light receiving elements are disposed adjacent to one another, and the two of the plurality of second light receiving elements are arranged so that the first-order diffracted light is focused on a position between the two of the plurality of second light receiving elements in an initial state

According to one or more embodiments, displacement of the irradiation position of the diffracted light may be detected by the two adjacent light receiving elements, simplifying the configuration of the laser light detection unit.

In a projector according to one or more embodiments of the present invention, it is also possible that the controller adjusts an output ratio among the plurality of laser light sources based on the calculated amount of change in the wavelength so as to achieve a predetermined color state, i.e., white balance among the combined laser lights combined by the combiner.

Thus, according to one or more embodiments, the combined laser lights can be maintained in a stable white balance.

One or more embodiments of the present invention can be realized not only as a projector provided with this characteristic control, but also as a head-up display device provided with this projector.

Moreover, one or more embodiments of the present invention can be realized not only as a projector provided with this characteristic control, but also as a projector control method having as steps processes executed by the characteristic control included in the projector. This projector control method for a projector that projects an image by combining laser lights of mutually differing colors may comprise: detecting an irradiation position of a first diffracted light for each of the laser lights and an irradiation position of a second diffracted light for each of the laser lights, calculating an amount of change in an optical axis for each of the laser lights based on a displacement of the irradiation position of the first diffracted light, calculating an amount of change in a wavelength for each of the laser lights based on the amount of change in the optical axis and a displacement of the irradiation position of the second diffracted light, and adjusting an output ratio of the laser lights based on the amount of change in the wavelength such that when the laser lights are combined, the laser lights are in a predetermined color state.

With a projector according to one or more embodiments of the present invention, the predetermined color state, such as white balance adjustment, can be maintained for combined laser lights of various colors by extracting/calculating only the amount of change in wavelength, even if wavelength and optical axis change in laser lights due to degradation over time or changes in temperature.

According to one or more embodiments, a predetermined color state is a state when white balance is achieved in the combined laser lights.

According to one or more embodiments, the projector control method may comprise changing a direction of propagation of the laser lights in correspondence to wavelengths of the laser lights.

According to one or more embodiments, the method may further comprise: detecting a change in the irradiation position of the first diffracted light when an optical axis of the laser lights changes; and detecting a change in the irradiation position of the second diffracted light when the optical axis of the laser lights or wavelength of the laser light changes.

According to one or more embodiments, the projector control method may further comprise: calculating the displacement of the irradiation position of the first diffracted light based on a change in ratio of an amount of light received between a plurality of first light receiving elements; and calculating the displacement in the irradiation position of the second diffracted light based on a change in ratio of an amount of light received between a plurality of second light receiving elements.

According to one or more embodiments, the method may comprise: detecting an irradiation position of zero-order diffracted light among the laser lights; and detecting an irradiation position of first-order diffracted light among the laser lights.

Brief Description of the Drawings

FIG. 1A is a view showing one example of a head-up display device according to one or more embodiments.

FIG. 1B is a view showing an example display in a case where an HUD device, according to one or more embodiments, is used for car navigation.

FIG. 2 is a block diagram of a projector and an HUD device according to one or more embodiments.

FIG. 3 is a schematic view showing a configuration of a laser light detection device according to one or more embodiments.

FIG. 4 is a view describing a relationship between laser light wavelength and output in which white balance is achieved according to one or more embodiments.

FIG. 5 is a flow chart describing a white balance adjustment method in a projector according to one or more embodiments.

FIG. 6 is a graph describing one example of a process for calculating wavelengths of various colored laser lights according to one or more embodiments.

FIG. 7 is a view describing a process for calculating an output ratio from various colored laser lights according to one or more embodiments.

FIG. 8 is a chromaticity graph describing a process for calculating an output ratio from various colored laser lights according to one or more embodiments.

Detailed Description of the Embodiments of the Invention

One or more embodiments of the present invention are described in detail below, with reference to the drawings. All numbers, shapes, materials, configuring elements, locations of configuring elements, modes of connection, steps, orders of steps, and so on are no more than examples and do not, in anyway, limit the scope of the claims that specify the present invention. Hence, configuring elements in the embodiments which are not described in the independent claims are not necessarily required, and are merely presented as examples and illustrations.

*Examples: One or More Embodiments of a Head-Up Display Device*

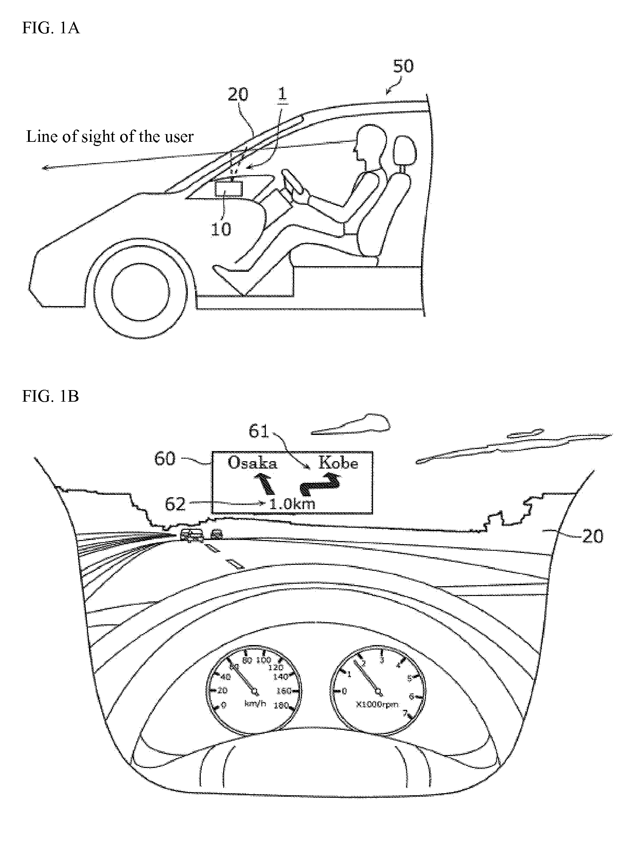

FIG. 1A is a view showing a head-up display device (hereafter "HUD device") according to one or more embodiments. The HUD device 1 shown in the drawing is built into (mounted inside) a transportation device such as a vehicle 50 or the like, for example. The HUD device 1 may include a projector 10 that projects an image containing information, and a transparent display panel 20 (windshield) that may be disposed in front of a line of sight of a user. The projector 10 may be disposed inside the dashboard of the vehicle 50, for example. The image projected by the projector 10 may be reflected towards the driver by a combiner that may be provided to the transparent display panel 20 (windshield) of the vehicle 50.

FIG. 1B is a view showing an example display in a case where an HUD device according to one or more embodiments may be used for car navigation. In this drawing, information relating to car navigation (e.g., route data to a destination) and the like may be displayed on the transparent display panel 20. Specifically, data 61 and 62, illustrating the branch offing of a main road indicating a route to Osaka and a route to Kobe at a location 1.0 km ahead of the current location, are indicated. The data 61 and 62 may be shown in a display area 60 of the transparent display panel 20. This data may be displayed to positions in the transparent display panel 20 matching the line of sight of the user (driver). The HUD device 1 may be installed in the vehicle 50 during manufacture of the vehicle.

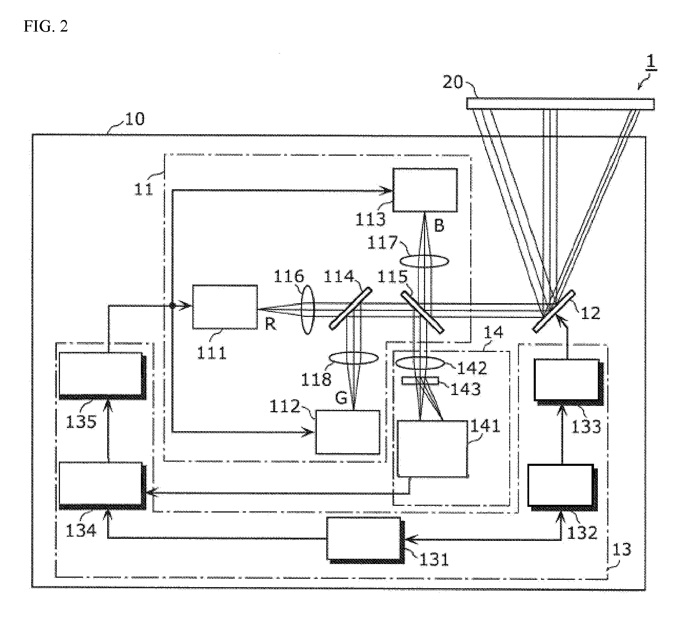

FIG. 2 is a block diagram of a projector and an HUD device according to one or more embodiments. The HUD device 1 shown in this drawing may be provided with the projector 10 and the transparent display panel 20. The projector 10 may be provided with a laser light generator 11, a laser light scanner 12, a controller 13 that controls the laser light generator 11 and the laser light scanner 12, and a laser light detection unit 14. The projector 10 may cause these configuring elements to function, thereby causing the laser light generator 11 to generate laser light which reflects a video signal, and project an image on the transparent display panel 20 by scanning the generated laser light with the laser light scanner 12.

*Examples: One or More Embodiments of a Projector*

The projector 10 according to one or more embodiments will be described in detail below.

The laser light generator 11 may include three laser light sources 111, 112, and 113, dichroic mirrors 114 and 115, and lenses 116, 117, and 118, and generate laser light reflecting image data for forming an image on the transparent display panel 20.

The laser light sources 111 to 113 may be laser diodes (LDs) that output laser light of mutually different colors. The laser light sources may be driven independently by drive currents supplied individually by a light source driver 135. The output laser light may have a single color component. The output laser light may have a plurality of color components. Single color component laser lights having specific wavelengths may be emitted, e.g., a red component (R) from the laser light source 111, a green component (G) from the laser light source 112, and a blue component (B) from the laser light source 113.

The dichroic mirrors 114 and 115 may only let laser lights of specific wavelengths pass and reflect other wavelengths, thereby combining the laser lights of each color component emitted by the laser light sources 111 to 113. Specifically, the red component and green component laser lights may be emitted by the laser light sources 111 and 112 that are combined by the dichroic mirror 114 upstream along the light path, and emitted to the dichroic mirror 115 downstream along the light path. The combined light thus emitted may be further combined with the blue component laser light emitted by the laser light source 113 in the dichroic mirror 115 and emitted to the laser light scanner 12 as the final target color light. The dichroic mirrors 114 and 115 and the lenses 116, 117, and 188 may be combined by a combining portion that combines various laser lights output by the laser light sources 111 to 113.

The laser light scanner may be provided with a scanning mirror and project an image on the transparent display panel 20, which is the projection surface, by scanning the combined laser light. In one or more embodiments, a MEMS-type (Micro Electro Mechanical System) scanning mirror may be used as a scanning mirror. It may be small and useful for energy-efficient and process-intensive uses. The scanning mirror may be scanned (displaced) in the horizontal (X) and vertical (Y) directions by a scanning driver 133 which receives a drive signal from a scanning controller 132.

A video processor 131 may send a light source controller 134 video data at specific time intervals based on a video signal received from a PC or other external device. The light source controller 134 thus may obtain pixel data for specific scanning positions.

The light source controller 134 may control the light source driver 135 by means of a drive current waveform signal in order to project an image composed of multiple pixels in the projection range based on the pixel data. In one or more embodiments, the light source controller 134 may control an output of the laser light sources 111 to 113 through the light source driver 135 so as to achieve white balance based on detection results by a laser light detector 141, as described below. Furthermore, every frame or every several frames of projected image, the light source controller 134 may execute a mode in which laser light may be output from one of the laser light sources 111 to 113 when displaying an image composed of the combined lights of the three color components by driving all the laser light sources 111 to 113, and laser light output from the other laser light sources is stopped, as described below. In other words, the laser light of each of the R, G, and B single color component laser lights may be output for short intervals when displaying an image comprising the combined light.

The light source driver 135 may drive the laser light sources 111 to 113, causing them to emit light, based on control by the light source controller 134. The laser light sources 111 to 113 output laser light when current greater than or equal to an oscillation threshold current may be supplied by the light source driver 135, and output laser light having great output (amount of light) as the value of the current being supplied grows. Furthermore, the laser light sources 111 to 113 may stop outputting laser light when the current supplied is less than the oscillation threshold value.

The video processor 131, the scanning controller 132, the scanning driver 133, the light source controller 134, and the light source driver 135 may constitute a controller for outputting combined laser light. The controller may maintain the predetermined color state, to the laser light scanner.

The laser light detection unit 14 may be provided with the laser light detector 141, a focusing lens 142, and a diffraction element 143. The laser light detector 141 may have a first laser light detector 141A that detects an irradiation position of a first diffracted light in the laser lights of various colors emitted by the laser light sources 111 to 113, and a second laser light detector 141B that detects an irradiation position of a second diffracted light in the laser lights of various colors. A configuration of the laser light detection unit 14 according to one or more embodiments will be described in detail below.

*Examples: One or More Embodiments of a Laser Light Detection Unit*

The diffraction element 143 and the focusing lens 142 may be disposed along a branching light path between the combiner and the laser light detector 141, and change the direction of propagation of the laser lights according to the wavelengths of the laser lights. The diffraction element 143 may change the angle of diffraction depending on the wavelength of the received laser light, for example. For example, with zero-order diffracted light, the direction of propagation does not change (i.e., the light is not diffracted) even if the wavelength changes, but with first-order diffracted light, the direction of propagation (angel of diffraction) changes if the wavelength changes. In one or more embodiments, the laser light detection unit 14, the controller 13 may extract the amount of change in wavelength due to the displacement of the irradiation position of the first and second diffracted lights.

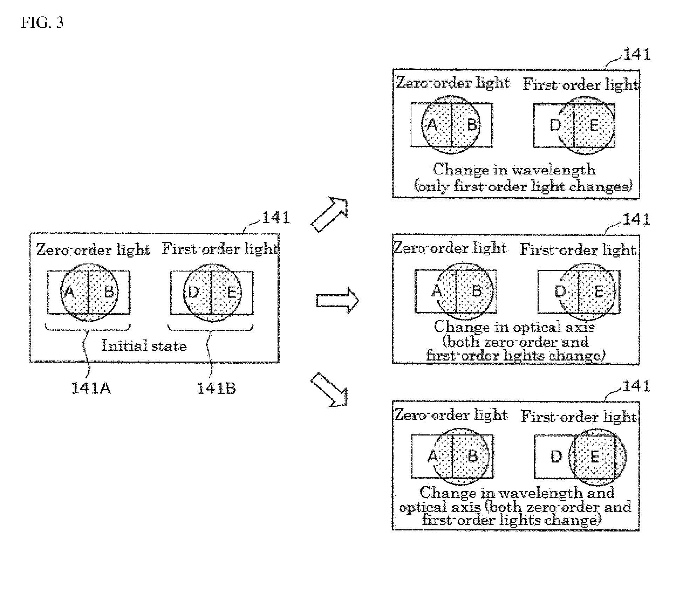

The laser light detector 141 may have a plurality of light receiving elements that detect the amount of light of laser lights emitted by the laser light sources 111 to 113 along the branching light path. Locations of the light receiving elements in the laser light detector 141 will be described in detail below, with reference to FIG. 3.

FIG. 3 is a schematic view showing a configuration of a laser light detection device according to one or more embodiments. The laser light detector 141 as shown in the drawing may comprise first light receiving elements A and B and second light receiving elements D and E. The first light receiving elements A and B and the second light receiving elements D and E may be disposed along a vertical surface relative to the branching light path. The first light receiving elements A and B may be disposed adjacently in an initial state, for example, such that laser light of the zero-order diffracted light, which may be the first diffracted light, may be irradiated with the same light reception amount, and configure the first laser light detector 141A. The second light receiving elements D and E may be disposed adjacently in an initial state, for example, such that laser light of the first-order diffracted light, which may be the second diffracted light, may be irradiated with the same light reception amount, and configure the first laser light detector 141B. In other words, the first laser light detector 141A may have the first light receiving elements A and B disposed along the direction in which the irradiation position of the first diffracted light may change, and the first light receiving elements A and B may be disposed so as to focus the first diffracted light in the initial state to a position between the first light receiving elements A and B. In other words, the second laser light detector 141B may have the first light receiving elements D and E disposed along the direction in which the irradiation position of the second diffracted light changes, and the second light receiving elements D and E may be disposed so as to focus the first diffracted light in the initial state to a position between the first light receiving elements D and E.

Assuming for purposes of illustration that a focal position of the zero-order diffracted light and the first-order diffracted light in the initial state is the origin point and that the focal position of the zero-order diffracted light changes, the ratio of the amount of light received between the first light receiving elements A and B may change, whereas when the focal position of the first-order diffracted light changes, the ratio of the amount of light received between the second light receiving elements D and E may change. The light source controller 134 may calculate the displacement of the irradiation position of the zero-order diffracted light based on the change in the ratio of the amount of light received between the first light receiving elements A and B, and may calculate the irradiation position of the first-order diffracted light based on the change in the ratio of the amount of light received between the second light receiving elements D and E. The two light receiving elements may be disposed along the direction in which the irradiation of the diffracted lights changes in the first laser light detector 141A and the second laser light detector 141B, and therefore the controller 13 may calculate the displacement of the irradiation position of the diffracted light based on a simple one-dimensional arrangement of the light receiving elements. Displacement of the irradiation position of the diffracted light may be detected by the two adjacent light receiving elements, simplifying the configuration of the laser light detection unit.

In one or more embodiments of the laser light detector 141, the following types of changes in laser light irradiation may be envisioned.

First, for example, in a case where only the wavelength of the laser light changes, the zero-order light does not cause the diffraction angle to change, and therefore the focal position of the laser light in the first laser light detector 141A may not change due to the change in the wavelength. On the other hand, for example, the first-order diffracted light does cause the diffraction angle to change due to the wavelength, and therefore the focal position of the laser light in the second laser light detector 141B may change. As a result, the ratio of the amount of light received between the first light receiving elements A and B (hereafter the "first received light amount ratio A-B") may be 0 and the ratio of the amount of light received between the second light receiving elements D and E (hereafter the "second received light amount ratio D-E") may be a negative value, for example.

In another example where only the optical axis of the laser light changes, the focal positions of both the zero-order diffracted light and the first-order diffracted light may change in the same way, irrespective of the disposition of the diffraction element 143. As a result, both the first received light amount ratio A-B and the second received light amount ratio D-E may be of negative values (-X), for example.

In a third example where both the wavelength and the optical axis of the laser light change, the zero-order diffracted light may not diffract, but the focal position of the laser light in the first laser light detector 141A may change by an amount equivalent to the change in the optical axis. One the other hand, the first-order diffracted light may cause the diffraction angle to change due to the wavelength, and therefore the focal position of the laser light in the second laser light detector 141B may change according to the change in the optical axis. As a result, the first received light amount ratio A-B has a next value (-Y), for example, and the second received light amount ratio D-E may also have a negative value (-Y-Z), for example.

Thus, in one or more embodiments, the focal position of the zero-order diffracted light detected by the first laser light detector 141A may change due to the change in the optical axis of the laser light. The focal position of the first-order diffracted light detected by the second laser light detector 141B may change due to at least either the change in the optical axis of the laser light or the change in the wavelength of the laser light, for example. The controller 13 may therefore remove an optical axis change component from the laser light included in the change of the irradiation position of the zero-order diffracted light from the optical axis change component and the wavelength change component of the laser light included in the change in the irradiation position of the first-order diffracted light, and thereby extract only the wavelength change component of the laser light.

*Examples: One or More Embodiments of an Output Control of the Laser Light Sources*

Output control of the laser light sources in the projector 10 having the above configuration will be described below.

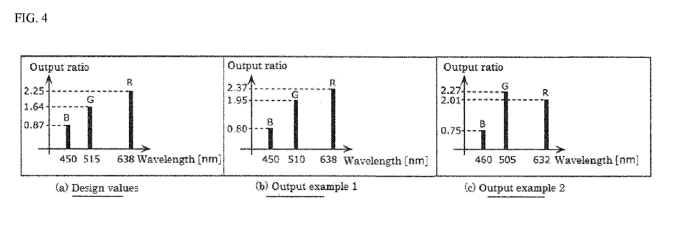

FIG. 4 is a view describing a relationship between laser light wavelength and output (power) ratio in which white balance may be achieved. FIG. 4(a) shows a relationship between design values for wavelengths emitted by the laser light sources 111 to 113 and may output ratios relative to these design values. In other words, in the case of the wavelengths of the design values, white may be realized by outputting all the lasers at an output ratio of R:G:B = 2.25:1.64:0.87.

In contrast, if the wavelengths change due to a change in temperature as shown in the output examples in FIG. 4(b) and FIG. 4(c), white may no longer be displayed unless the output ratio is changed.

For example, in output example 1, if the laser light output ratio for a wavelength of 450 nm (blue) is 0.80, the laser light output ratio for a wavelength of 505 nm (green) is 1.95, and the laser light output ratio for a wavelength of 638 nm (red) is 2.37, the combined light of these single-color laser lights may be shown to achieve white balance.

In output example 2, if the laser light output ratio for a wavelength of 460 nm (blue) is 0.75, the laser light output ratio for a wavelength of 505 nm (green) is 2.27, and the laser light output ratio for a wavelength of 632 nm (red) is 2.01, then the combined light of these single-color laser lights may be shown to achieve white balance.

Conventionally, the laser light output may be adjusted without extracting/calculating the wavelength change component, simply by detecting changes in the amount of light of the laser light. Therefore, even if a change in the amount of light is detected, it may be unknown as to whether it is simply the amount of light which has changed, and the output ratio may need only be returned to its original value or the amount of light may have changed due to a change in wavelength and the output ratio needs to be changed based on a change in the wavelength. Accurate power adjustments may be impossible, making it impossible to achieve the target white balance using conventional technology.

In contrast, the light source controller 134 according to one or more embodiments of the present invention may accurately calculate the wavelengths of the laser lights of each color emitted by the laser light sources 111 to 113 to calculate the laser light output ratios for each color whereby white balance is achieved, using the calculated wavelengths, on the basis of which the output of the laser light sources 111 to 113 is controlled. It may therefore be possible to maintain the combined light in the predetermined color state through white balance adjustment and the like, even if the wavelengths of the laser lights change due to temperature change or the like.

An example will be described below in which the wavelength of the various colored laser lights may be calculated from the amount of light received as measured by the laser light detection unit 14, and the output ratio of the various colored laser lights may be adjusted based on the calculated wavelengths.

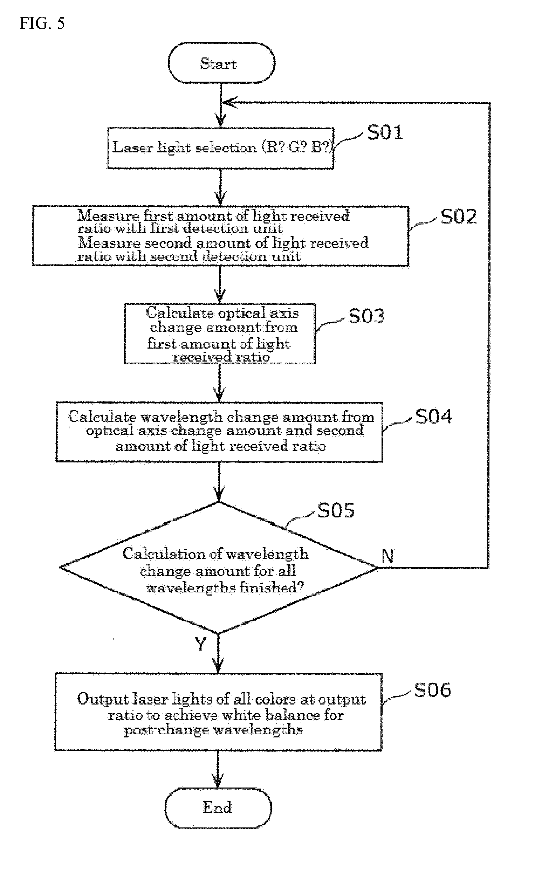

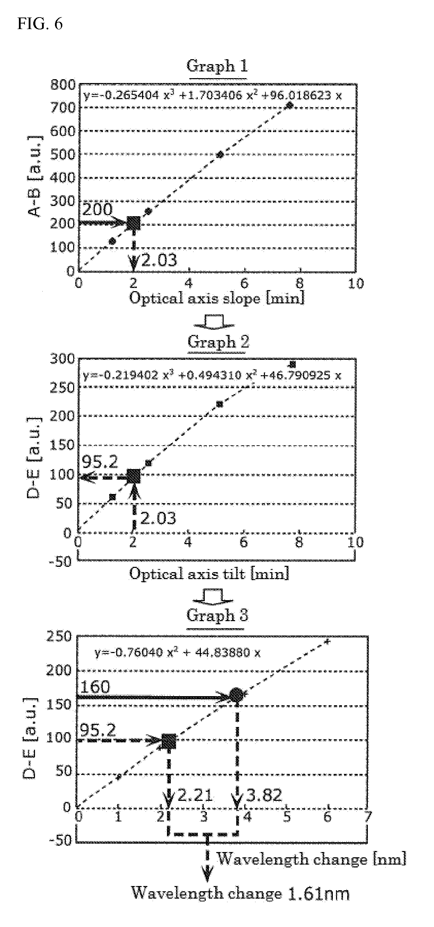

FIG. 5 is a flow chart describing a white balance adjustment method in a projector according to one or more embodiments. FIG. 6 is a graph describing one example of a process for calculating wavelength of the green laser light according to one or more embodiments. In this example, the wavelength of the laser light emitted by the green laser light source 112 may be calculated. When calculating the wavelengths of the other laser lights emitted by the other laser light sources 111 and 113, the same process as in this example may be used.

Graph 1 in FIG. 6 shows the relationship between the first received light amount ratio A-B and the change in optical axis in the first laser light detector 141A according to one or more embodiments. Graph 2 in FIG. 6 shows the relationship between the second received light amount ratio D-E and the change in optical axis in the second laser light detector 141B when only the optical axis has changed according to one or more embodiments. Graph 3 in FIG. 6 shows the relationship between the second received light amount ratio D-E and the change in wavelength in the second laser light detector 141B when only the wavelength has changed according to one or more embodiments. Note that the projector 10 has data corresponding to graphs 1 to 3 pre-stored in a memory, for example, in the projector 10 according to one or more embodiments.

The light source controller 134 may select the green laser light source 112 as the laser light source to be adjusted (S01).

Next, assuming for purposes of illustration that 200 (a.u.) may be measured as the first received light amount ratio A-B by the first laser light detector 141A and 160 (a.u.) may be measured as the second received light amount ratio D-E (S02). Step S02 may be a detection step of detecting irradiation positions for the zero-order diffracted light and the first-order diffracted light of the laser light.

Next, the light source controller 134 may reference Graph 1 and acquire 2.03 (min) as the optical axis change for the first received light amount ratio A-B of 200 (a.u.) (S03). Step S03 may be an optical axis change extraction/calculation step of extracting/calculating an amount of change in the optical axis of the laser light based on displacement of the irradiation of the zero-order diffracted light.

Next, the light source controller 134 may reference Graph 2 and acquire 95.2 (a.u.) as the second received light amount ratio D-E for an optical axis change of 2.03 (min).

Next, the light source controller 134 may reference Graph 3 and acquire 2.21 (nm) as the wavelength change for the second received light amount ratio D-E of 95.2 (a.u.) (S03). At the same time, the light source controller 134 may reference Graph 3 and acquire 3.82 (nm) as the wavelength change for the second received light amount ratio D-E of 160 (a.u.) (S03).

Next, the light source controller 134 may calculate a true wavelength change amount 1.61 (nm) by subtracting the wavelength change 2.21 (nm), which may correspond to the change in optical axis in the second received light amount ratio D-E from the wavelength change 3.82 (nm) in a case in which it is assumed that the second received light amount ratio D-E depends on all the wavelength changes (S04). Step S04 may be a wavelength change extraction/calculation step of extracting/calculating an amount of change in the wavelength of the laser light based on the optical axis change amount and displacement of the irradiation of the first-order diffracted light.

The light source controller 134 may execute the same wavelength change calculation process as above for the red laser light and the blue laser light, thereby calculating the wavelengths after the change in the laser light emitted from the laser light sources 111 to 113.

Next, the light source controller 134 may find the output ratio for the various colored laser lights using the general calculation process shown below based on the changed wavelengths of the various colored wavelengths thus calculated. Step S06 may be an output adjustment step of adjusting an output ratio of the laser lights based on the wavelength change amount which has been extracted such that the combined laser light, which may be the combination of the various laser lights, is in the predetermined color state.

Assuming for purposes of illustration that the calculated RGB laser light wavelengths are R:637 nm, G:510 nm, B:445 nm and calculate the RGB output ratio which achieves white balance at these laser light wavelengths may be a:b:c will be described as an example.

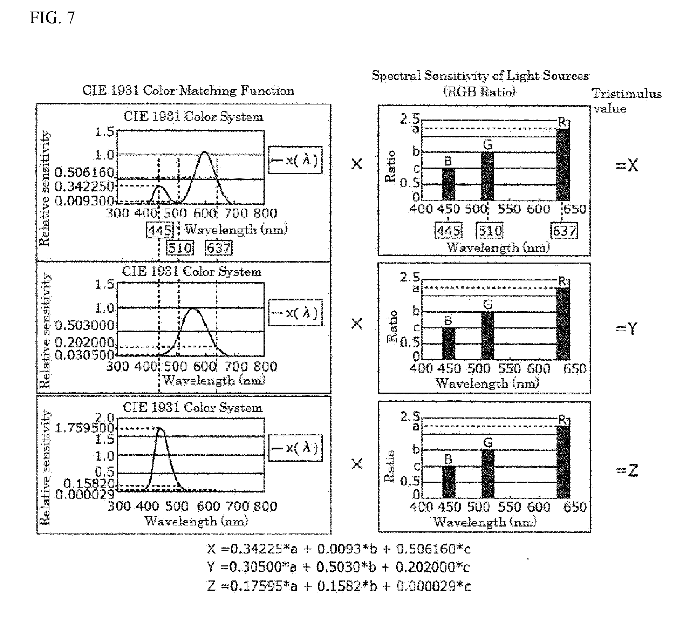

FIG. 7 is a view describing a process of calculating an output ratio from various colored laser lights according to one or more embodiments. In this drawing, the tristimulus value (X, Y, Z) may be found from a color-matching function (CIE 1931 (International Commission on Illumination, 1931) color space in this example) and the RGB ratio (R:G:B=a:b:c), which is the spectral sensitivity. In this example, the following may hold.

$$X = 0.34225 \cdot a + 0.0093 \cdot b + 0.506160 \cdot c \quad \text{(Formula 1)}$$

$$Y = 0.30500 \cdot a + 0.5030 \cdot b + 0.20200 \cdot c \quad \text{(Formula 2)}$$

$$Z = 0.17595 \cdot a + 0.1582 \cdot b + 0.000029 \cdot c \quad \text{(Formula 3)}$$

The ratio of the tristimulus value (X, Y, Z) may be converted into chromaticity x, y. In this example, this conversion may be done so: x = X/(X+Y+Z) and y = Y/(X+Y+Z).

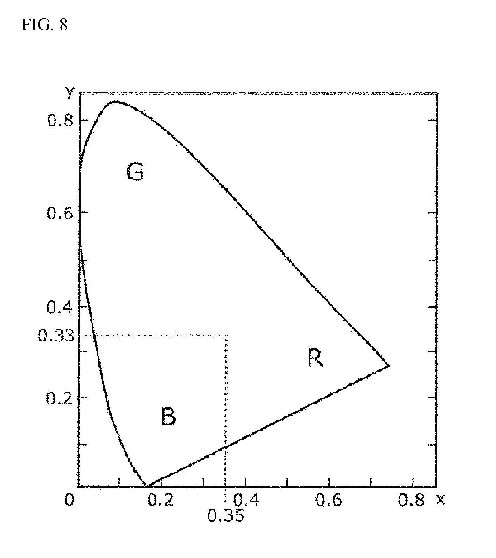

FIG. 8 is a chromaticity graph describing a process for calculating an output ratio from various colored laser lights according to one or more embodiments. The RGB ratio (a, b, c) may be calculated such that the chromaticity (x, y) attains white (e.g., x = 0.33, y = 0.33) in the chromaticity graph in FIG. 8 in which red is indicated by R, green by G, and blue by B). In this example, white is a white balance that may be achieved by an RGB ratio (a, b, c) of (3.4:2.7:1.0).

Lastly, the light source controller 134 may adjust the laser light sources 111 to 113 by setting the output ratio for the laser light sources 111 to 113 after a change in wavelength to 3.4:2.7:1.0.

In one or more embodiments, various of the above patterns may be stored in the memory of the projector 10 as a table in order for the light source controller 134 to achieve a white balance by setting the output ratio of the laser light sources 111 to 113 by reading the stored patterns as appropriate, based on the wavelengths of the various colored laser lights as calculated by the light source controller 134.

Thus, with the projector 10 according to one or more embodiments, the light source controller 134 may extract or calculate the optical axis change amount for the laser lights based on the displacement of the irradiation position of the first diffracted light, extract or calculate the wavelength change amount for the laser lights based on the optical axis change amount and the displacement of the irradiation position of the second diffracted light, and adjust the output ratio of the laser light sources 111 to 113 based on the wavelength change amount such that the combined laser light attains the predetermined color state. Thus, even if the optical axes and wavelengths of the various colored laser lights output by the laser light sources 111 to 113 become misaligned due to degradation over time or temperature fluctuations, the light source controller 134 may precisely extract or calculate the wavelength change component based on the ratio of the amount of light received as detected by the light receiving elements in the laser light detection unit 14. The light source controller 134 may set the output of the laser light sources 111 to 113 so as to attain the white balance based on the extracted/calculated wavelengths, and causes them to output. It is therefore possible to maintain the combined light in the predetermined color state through white balance adjustment and the like, even if the wavelengths of the laser lights may change due to degradation over time, temperature change, or the like.

A projector and HUD device according to one or more embodiments of the present invention are described above, but the present invention is not limited to such embodiments.

In view of the above one or more embodiments, an example of the projector 10 that combines the laser lights for three color components, red (R), green (G), and blue (B), and projects a color image onto a projection surface by scanning the combined light using a scanning mirror is described, but the present invention may be applied to various types of image display devices that display color images by combining laser lights of mutually different color components output by laser light sources. Moreover, in one or more embodiments, a state where the white balance in combined light is attained is described as an example, but it is obvious from the above description that the present invention may also attain a different predetermined color state.

With the above embodiment, the first laser light detector 141A and the second laser light detector 141B are presented in examples having two adjacent light receiving elements, but a configuration including an arrangement of three or more light receiving elements is also included in the present invention. The more light receiving elements there are configuring the detection unit, the greater the precision with which the displacement of the irradiation position of the diffracted light may be detected.

Furthermore, in one or more embodiments, a case is described where the projector 10 is mounted as an HUD device for a vehicle, but this is not a limitation. The projector 10 may be mounted as an HUD for an aircraft, for example.

Furthermore, in one or more embodiments, a case is described where the projector 10 is mounted in an HUD device, but this is not a limitation. The projector 10 may be used as a projector for projecting images on a screen mounted on a wall or the like, for example.

Furthermore, in one or more embodiments, laser light sources may be used as the light sources, but this is not a limitation. LED (light emitting diode) light sources, for example, can also be used as the light sources.

It is also possible for the projector to be configured specifically by computer system configured by a microprocessor, a ROM, a RAM, a hard disk drive, a display, a keyboard, a mouse, and so on. The RAM or hard disk drive may store computer programs. The microprocessor configuring the controller 13 may operate according to computer programs stored in a CPU, thereby causing the projector and the HUD device of the present invention to function as intended. The computer programs may be configured by combining many instruction codes to give instructions to the computer, in order to attain the intended functionality.

Moreover, all or part(s) of the configuring elements which make up the controller 13 may be configured by one system LSI (large scale integration circuit). The system LSI may be a supermultifunctional LSI made by integrating many configuring parts on one chip, specifically computer system configured by a microprocessor, a ROM, a RAM, and so on. The RAM may store computer programs. The microprocessor may operate in accordance with the computer programs, thereby allowing the system LSI to perform as intended.

Moreover, all or part of the configuring elements making up the controller 13 may be configured by IC cards or standalone modules which may be attached and removed to various devices. The IC cards or modules may be a computer system made up of a microprocessor, a ROM, a RAM, and so on. The IC cards or modules may include the super multifunctional LSI. The microprocessor may operate in accordance with the computer programs, thereby allowing the IC cards or modules to perform as intended. The IC cards or modules may be tamper resistant.

One laser light detector may be disposed for each laser light source. For example, a configuration is also possible wherein a laser light detector for detecting red laser light may be disposed between the laser light source 111 and the dichroic mirror 114, a laser light detector for detecting green laser light may be disposed between the laser light source 112 and the dichroic mirror 114, and a laser light detector for detecting blue laser light may be disposed between the laser light source 113 and the dichroic mirror 114.

Furthermore, one aspect of one or more embodiments of the invention may be a projector control method. Specifically, a projector control method according to one or more embodiments may be a control method for a projector which may project an image by combining laser lights having mutually differing color components, comprising a detection step of detecting an irradiation position of a first diffracted light for each of multiple laser lights and detecting an irradiation position of a second diffracted light for the laser lights, an optical axis change extraction/calculation step of extracting/calculating an amount of change in optical axes of the laser lights based on displacement of the irradiation position of the first diffracted light, a wavelength change extraction/calculation step of extracting/calculating an amount of change in wavelengths of the laser lights based on the optical axis change amount and displacement of the irradiation position of the second diffracted light, and an output adjustment step of adjusting an output ratio of the laser lights based on the extracted/calculated wavelength change amount such that combined laser light, in which the laser lights have been combined, attains a predetermined color state.

Furthermore, one or more embodiments may be a computer program that may allow a computer to realize the projector control method, or it may be a digital signal that may comprise the computer program.

Furthermore, one or more embodiments may be the computer program or the digital signal recorded on a non-temporary computer-readable storage medium, e.g., a flexible disk, a hard disk, a CD-ROM, an MO, a DVD, a DVD-ROM, a DVD-RAM, a BD (Blu-ray™ Disc), a semiconductor memory, or the like. Furthermore, it is also possible for one or more embodiments of the present invention to be a digital signal stored on one of these non-temporary storage medium.

Moreover, one or more embodiments of the present invention may be such that the computer program or the digital signal may be transmitted over an electric communication line, via a wireless or wired communication line, over a network such as the Internet, through data broadcasting, or the like.

Furthermore, one or more embodiments of the present invention may also be a computer system provided with a microprocessor and a memory, wherein the memory stores the computer program above and the microprocessor operates in accordance with the computer program.

Moreover, it may be possible to cause an independent and separate computer system to execute the program or digital signal by recording the program or digital signal on the non-temporary storage media and moving them, moving them by transferring them over a network or the like.

The present invention may be applied to a projector that displays images and a HUD display for a vehicle, for example. While the disclosure includes a limited number of embodiments, those skilled in the art, having benefit of this disclosure, will appreciate that other embodiments may be devised which do not depart from the scope of the present disclosure. Furthermore, those of ordinary skill in the art would appreciate that certain "units," "parts," "elements," or "portions" of one or more embodiments of the present invention may be implemented by a circuit, processor, etc. using known methods. Accordingly, the scope should be limited only by the attached claims.

Explanation of the Reference Numerals

| | |
|---|---|
| 1 | HUD device |
| 10 | Projector |
| 11 | Laser light generator |
| 12 | Laser light scanner |
| 13 | Controller |
| 14 | Laser light detection unit |
| 20 | Transparent display panel |
| 50 | Vehicle |
| 60 | Display area |
| 61, 62 | Data |
| 111, 112, 113 | Laser light sources |
| 114, 115 | Dichroic mirrors |
| 116, 117, 118 | Lenses |
| 131 | Video processor |
| 132 | Scanning controller |
| 133 | Scanning driver |
| 134 | Light source controller |
| 135 | Light source driver |
| 141 | Laser light detector |
| 141A | First light detector |
| 141B | Second light detector |
| 142 | Focusing lens |
| 143 | Diffraction element |

**Claims**

1.  A projector, comprising:

    a plurality of laser light sources (111, 112, 113) configured to emit laser lights of mutually differing colors;
    a combiner configured to combine the laser lights;
    a laser light scanner (12) configured to project an image onto a projection surface by scanning the laser lights combined by the combiner;
    a laser light detection unit (14) comprising:

    a first laser light detector (141A) configured to detect an irradiation position of a first diffracted light of the laser lights emitted by the plurality of laser light sources; and
    a second laser light detector (141B) configured to detect an irradiation position of a second diffracted light of the laser lights; and
    a controller (13) configured to:

    calculates an amount of change in an optical axis of the laser lights based on a displacement of the irradiation position of the first diffracted light,
    calculates an amount of change in a wavelength of the laser lights based on the amount of change in the optical axis and a displacement of the irradiation position of the second diffracted light, and
    adjusts an output ratio for the plurality of laser light sources (111, 112, 113) according to the amount of change in the wavelength of the laser lights.

2.  The projector as claimed in claim 1, wherein
    the laser light detection unit (14) further comprises a diffraction element (143) disposed between the combiner and the first laser light detector (141A) and the second laser light detector (141B) and configured to change a direction of propagation of the laser lights according to the wavelength of the laser lights.

3.  The projector as claimed in claim 1 or claim 2, wherein

the first laser light detector (141A) is configured to detect a change in the irradiation position of the first diffracted light when the optical axis of the laser lights changes, and

the second laser light detector (141B) is configured to detect a change in the irradiation position of the second diffracted light when the optical axis or the wavelength of the laser lights changes.

4. The projector as claimed in any one of claims 1 to 3, wherein
the first laser light detector (141A) comprises a plurality of first light receiving elements disposed along a direction of change of the irradiation position of the first diffracted light,
the second laser light detector (141B) comprises a plurality of second light receiving elements disposed along a direction of change of the irradiation position of the second diffracted light, and
the controller (13) is configured to calculate the displacement of the irradiation position of the first diffracted light based on a change in ratio of an amount of light received between the plurality of first light receiving elements and the displacement in the irradiation position of the second diffracted light based on a change in ratio of an amount of light received between the plurality of second light receiving elements.

5. The projector as claimed in claim 4, wherein
the plurality of first light receiving elements are disposed to detect an irradiation position of zero-order diffracted light among the laser lights output by the plurality of laser light sources (111, 112, 113), and
the plurality of second light receiving elements are disposed to detect an irradiation position of first-order diffracted light among the laser lights output by the plurality of laser light sources (111, 112, 113).

6. The projector as claimed in claim 5, wherein
two of the plurality of first light receiving elements are disposed adjacent to one another,
the two of the plurality of first light receiving elements are arranged so that the zero-order diffracted light is focused on a position between the two of the plurality of first light receiving elements in an initial state,
two of the plurality of second light receiving elements are disposed adjacent to one another, and
the two of the plurality of second light receiving elements are arranged so that the first-order diffracted light is focused on a position between the two of the plurality of second light receiving elements in an initial state.

7. The projector as claimed in any one of claims 1 to 6, wherein
the controller (13) is configured to adjust an output ratio among the plurality of laser light sources (111, 112, 113) based on the calculated amount of change in the wavelength so as to achieve white balance among the laser lights combined by the combiner.

8. A head-up display device comprising the projector as claimed in claim 1 and a transparent display panel (20) onto which an image is projected by scanning the laser lights combined by the combiner.

9. A projector control method for a projector (10) configured to project an image by combining laser lights of mutually differing colors, the projector control method comprising:

detecting an irradiation position of a first diffracted light for each of the laser lights and an irradiation position of a second diffracted light for each of the laser lights,
calculating an amount of change in an optical axis for each of the laser lights based on a displacement of the irradiation position of the first diffracted light,
calculating an amount of change in a wavelength for each of the laser lights based on the amount of change in the optical axis and a displacement of the irradiation position of the second diffracted light, and
adjusting an output ratio of the laser lights based on the amount of change in the wavelength such that when the laser lights are combined, the laser lights are in a predetermined color state.

10. The projector control method as claimed in claim 9, wherein a predetermined color state is a state when white balance is achieved in the combined laser lights.

11. The projector control method as claimed in claim 9, further comprising:

changing a direction of propagation of the laser lights in correspondence to wavelengths of the laser lights.

12. The projector control method as claimed in claim 9, further comprising:

detecting a change in the irradiation position of the first diffracted light when an optical axis of the laser lights changes; and

detecting a change in the irradiation position of the second diffracted light when the optical axis of the laser lights or wavelength of the laser light changes.

13. The projector control method as claimed in claim 9, further comprising:

calculating the displacement of the irradiation position of the first diffracted light based on a change in ratio of an amount of light received between a plurality of first light receiving elements; and

calculating the displacement in the irradiation position of the second diffracted light based on a change in ratio of an amount of light received between a plurality of second light receiving elements.

14. The projector control method as claimed in claim 9, further comprising:

detecting an irradiation position of zero-order diffracted light among the laser lights; and

detecting an irradiation position of first-order diffracted light among the laser lights.

FIG. 1A

FIG. 1B

FIG. 2

FIG. 3

**Initial state (141):**
Zero-order light — A | B (141A)
First-order light — D | E (141B)

**Change in wavelength (only first-order light changes) (141):**
Zero-order light — A | B
First-order light — D | E

**Change in optical axis (both zero-order and first-order lights change) (141):**
Zero-order light — A | B
First-order light — D | E

**Change in wavelength and optical axis (both zero-order and first-order lights change) (141):**
Zero-order light — A | B
First-order light — D | E

FIG. 4

(a) Design values      (b) Output example 1      (c) Output example 2

FIG. 5

```
                    ┌─────────────┐
                    │    Start    │
                    └─────────────┘
                           │
                           ▼
              ┌──────────────────────────────┐
              │ Laser light selection (R? G? B?) │──S01
              └──────────────────────────────┘
                           │
                           ▼
        ┌────────────────────────────────────────┐
        │ Measure first amount of light received   │──S02
        │ ratio with first detection unit          │
        │ Measure second amount of light received  │
        │ ratio with second detection unit         │
        └────────────────────────────────────────┘
                           │
                           ▼
              ┌──────────────────────┐
              │ Calculate optical axis │──S03
              │ change amount from     │
              │ first amount of light  │
              │ received ratio         │
              └──────────────────────┘
                           │
                           ▼
      ┌──────────────────────────────────────────┐
      │ Calculate wavelength change amount from    │──S04
      │ optical axis change amount and second      │
      │ amount of light received ratio             │
      └──────────────────────────────────────────┘
                           │
                           ▼
                        ╱────────╲
                       ╱  Calculation ╲
                      ╱  of wavelength  ╲  N
                      ╲  change amount for╱────┐
                       ╲  all wavelengths ╱     │
                        ╲  finished?  S05╱      │
                         ╲──────────╱          │
                           │ Y                  │
                           ▼                    │
      ┌──────────────────────────────────────────┐
      │ Output laser lights of all colors at output│──S06
      │ ratio to achieve white balance for         │
      │ post-change wavelengths                    │
      └──────────────────────────────────────────┘
                           │
                           ▼
                    ┌─────────────┐
                    │     End     │
                    └─────────────┘
```

FIG. 6

Graph 1

$y=-0.265404 \ x^3 +1.703406 \ x^2 +96.018623 \ x$

Graph 2

$y=-0.219402 \ x^3 +0.494310 \ x^2 +46.790925 \ x$

Graph 3

$y=-0.76040 \ x^2 + 44.83880 \ x$

Wavelength change 1.61nm

FIG. 7

$$X = 0.34225*a + 0.0093*b + 0.506160*c$$
$$Y = 0.30500*a + 0.5030*b + 0.202000*c$$
$$Z = 0.17595*a + 0.1582*b + 0.000029*c$$

FIG. 8

| Europäisches<br>Patentamt<br>European<br>Patent Office<br>Office européen<br>des brevets | **EUROPEAN SEARCH REPORT** | Application Number<br>EP 14 15 9885 |
|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/279494 A1 (DRUMM JAN OLIVER [DE] ET AL) 17 November 2011 (2011-11-17)<br>* paragraph [0002]; figure 10 *<br>* paragraph [0003] *<br>* paragraph [0004] *<br>* paragraph [0113] *<br>* paragraph [0114] *<br>* paragraph [0103] *<br>* paragraph [0011] *<br>----- | 1-14 | INV.<br>G01J3/46<br>G01J3/18<br>G01J3/24<br>H04N1/60<br>H04N9/31<br>H04N9/73<br>G01J3/12<br>G01J3/28 |
| T | Michael Czuray ET AL: "Spektralanalyse mit Tracker",<br>,<br>20 June 2014 (2014-06-20), XP055124481,<br>Retrieved from the Internet:<br>URL:http://www.physi.uni-heidelberg.de/~ei sele/Experimentsheets/SpektrenvonLichtquel len.pdf<br>[retrieved on 2014-06-20]<br>* sections "Wellenlänge einer Infrarot-Fernbedienung", "Einsatz dieser Versuche in der Schule", "Aufbau", Auswertung" *<br>----- | 1-14 | |
| A | US 2009/160833 A1 (BROWN MARGARET K [US] ET AL) 25 June 2009 (2009-06-25)<br>* abstract; claims 1,2 *<br>* paragraph [0032] *<br>* paragraph [0031] *<br>----- | 1-14 | TECHNICAL FIELDS SEARCHED (IPC)<br>G01J<br>H04N |

The present search report has been drawn up for all claims

| Place of search | Date of completion of the search | Examiner |
|---|---|---|
| Munich | 20 June 2014 | Thieme, Markus |

**ANNEX TO THE EUROPEAN SEARCH REPORT
ON EUROPEAN PATENT APPLICATION NO.**

EP 14 15 9885

This annex lists the patent family members relating to the patent documents cited in the above-mentioned European search report.
The members are as contained in the European Patent Office EDP file on
The European Patent Office is in no way liable for these particulars which are merely given for the purpose of information.

20-06-2014

| Patent document cited in search report | Publication date | Patent family member(s) | Publication date |
|---|---|---|---|
| US 2011279494 A1 | 17-11-2011 | CN 102301722 A | 28-12-2011 |
| | | DE 102008059639 A1 | 02-06-2010 |
| | | EP 2351376 A1 | 03-08-2011 |
| | | KR 20110099022 A | 05-09-2011 |
| | | US 2011279494 A1 | 17-11-2011 |
| | | WO 2010060775 A1 | 03-06-2010 |
| US 2009160833 A1 | 25-06-2009 | CN 101897191 A | 24-11-2010 |
| | | EP 2223532 A1 | 01-09-2010 |
| | | JP 5232245 B2 | 10-07-2013 |
| | | JP 2011508520 A | 10-03-2011 |
| | | US 2009160833 A1 | 25-06-2009 |
| | | US 2011205498 A1 | 25-08-2011 |
| | | WO 2009085396 A1 | 09-07-2009 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008003270 A